Europäisches Patentamt

European Patent Office

Office européen des brevets

(11) Publication number: **0 113 119**
**B1**

## EUROPEAN PATENT SPECIFICATION

(45) Date of publication of patent specification: **23.08.89**

(51) Int. Cl.⁴: **G 06 K 9/34**

(21) Application number: **83113182.6**

(22) Date of filing: **28.12.83**

(54) Character pitch detecting apparatus.

(30) Priority: **28.12.82 JP 229025/82**
**05.01.83 JP 317/83**

(43) Date of publication of application:
**11.07.84 Bulletin 84/28**

(45) Publication of the grant of the patent:
**23.08.89 Bulletin 89/34**

(84) Designated Contracting States:
**DE IT NL**

(56) References cited:
**IBM TECHNICAL DISCLOSURE BULLETIN, vol.
14, no. 10, March 1972, pages 3104-3107, New
York, US; R.J. BAUMGARTNER: "Character
pitch determination"**

(73) Proprietor: **NEC CORPORATION**
**33-1, Shiba 5-chome, Minato-ku**
**Tokyo 108 (JP)**

(72) Inventor: **Tsuji, Yoshitake c/o NEC Corporation**
**33-1, Shiba 5-chome Minato-ku**
**Tokyo (JP)**

(74) Representative: **Vossius & Partner**
**Siebertstrasse 4 P.O. Box 86 07 67**
**D-8000 München 86 (DE)**

## Description

This invention relates to a character pitch detecting apparatus for use in a character segmenting system, and more particularly to a character pitch detecting apparatus for detecting whether a character block (which is a group of substantially aligned characters) printed on a paper and including merged characters is of a variable-pitch type or a fixed-pitch type.

There has been proposed and used in practice an optical character recognition (OCR) system for recognizing characters such as alphabets, numerals and Katakana (Japanese character) which are machine-printed or hand-writeen. However, the scope of the characters to be recognized by the OCR system is to be expanded to mail articles and documents in which the characters are touching or partially merging with each other. For performing the character segmentation in the character block including the merged characters, it is first necessary to detect whether the character blcok is of variable-pitch type or fixed-pitch type.

To detect whether the character block is of the variable-pitch type or the fixed-pitch type, there is a statistical method in which the character pitch is detected with reference to a frequency distribution of all widths of the character blocks including the merged characters. According to the statistical method, as the number of characters merged with each other is increased, the accuracy in the detection is deteriorated.

In IBM Technical Disclosure Bulletin, Vol. 14, No. 10, March 1972, pages 3104—3107 a character pitch detection apparatus is disclosed in which the character pitch is determined by raster scanning characters one line at a time and applying the resulting video data to a video processor, which builds a table based upon character blocks. This apparatus uses the variance of one-character block lengths to make the decision as to whether the pitch is fixed or variable.

It is an object of this invention to provide a character pitch detecting apparatus capable of stably detecting a character pitch in various kinds of printed characters having unknown character pitches.

This object is achieved by the apparatus according to claim 1.

Other features and advantages of this invention will be apparent from the following description of preferred embodiments of this invention taken in conjunction with the accompanying drawings, wherein:

Fig. 1 is a block diagram of a first embodiment of this invention;

Fig. 2 is a block diagram of a second embodiment of this invention; and

Fig. 3 is a block diagram of a decision circuit used in the second embodiment shown in Fig. 2.

In the following description, signals on signal lines are represented by adding a symbol S at the end of reference numerals representative of the signal lines.

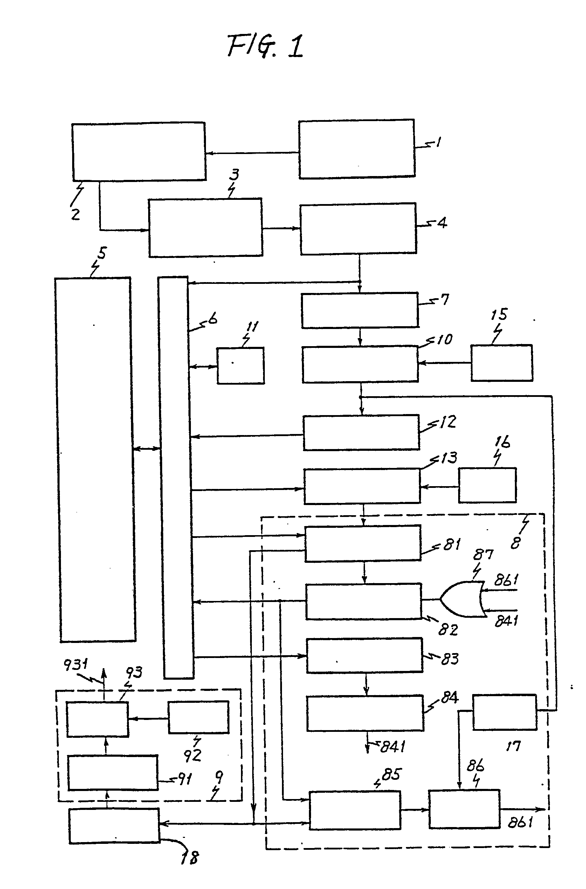

Referring to Fig. 1, a scanner 1 optically scans a character array printed or hand-written on a paper to produce an electric signal, which is converted to a binary character image and then written into a character memory 2. A character-block extractor 3 detects character images, i.e., character blocks which are surrounded by white (binary "0") bits in the stored binary character image in the memory 2, and supplies to a character block register 4 character block data including beginning point, width and height thereof. The character block extractor 3 is disclosed in JP—A—57/141779.

The width data of a plurality of character blocks stored in the character block register 4 are sequentially transferred to a controller 6. The controller 6 converts sequentially transferred width data to addresses for a frequency table memory 5 from which stored contents are read out and incremented by +1 in an adder 11. The incremented contents are then stored at the same addresses in the frequency table memory 5. Thus, the frequency values of the character blocks having the width $V_i$ are stored at the address $V_i$ in the frequency table memory (The frequency table memory 5 has been reset to "0" at the start of the operation).

The height data of the plurality of character blocks stored in the character block register 4 are sequentially transferred to an average-height detector 7. The average-height detector 7 calculates an average-value $H_m$ in the height of the plurality of character blocks. The detector 7 may be of a circuit for producing the most frequently appeared height as the average height. The average height data $H_m$ is supplied to a multiplier 10 which is also supplied with constants $C_1$, $C_2$ and $C_3$ ($C_1 < C_2$, $C_3 < C_2$) from a constant register 15, and calculates values $C_1 H_m$, $C_2 H_m$ and $C_3 H_m$. The values $C_1 H_m$ and $C_2 H_m$ ($C_1 H_m < C_2 H_m$) are stored as lower limit and upper limit of a width range for a possible one-character in a one-character width-range register 12, respectively. The value $C_3 H_m$ is stored in a threshold value register 17.

The values $C_1 H_m$ and $C_2 H_m$ are supplied through the controller 6 to the frequency table memory 5, whereby the frequency values for the character widths within the width range from $C_1 H_m$ to $C_2 H_M$ are read out from the frequency table memory 5 and then supplied to a most-frequently appeared width detector 13 which is also supplied with a constant $\Delta T$ from a constant register 16. The detector 13 counts the frequency values at an interval $\Delta T$ to detect the lower and upper limit values $V_L$ and $V_U$ representative of the most-frequently appeared width range; where

$$C_1 H_m \leqq V_L \leqq C_2 H_m - \Delta T$$
$$C_1 H_m + \Delta T \leqq V_U \leqq C_2 H_m$$
$$V_U - V_L \times \Delta T.$$

The lower and upper limit values $V_L$ and $V_U$, and the frequency value $N_S$ counted within the interval are supplied to a one-character initial class register 81 in a one-character class register 8. The register 8 updates the upper limit value $V_U$ in response to the frequency information stored in the memory 5 to provide a one-character width section, i.e., upper value and lower value of the width of the one-character. The register 8 comprises a one-character initial class register 81, a counter 82, a frequency value register 83, a zero detector 84, a substractor 85, a comparator 86 and an OR-circuit 87.

The upper limit value $V_U$ stored in the register 81 is set in the counter 82 and counted up by +1. The frequency value corresponding to the width of the character block which is the content of the counter 82 is read out from the table memory 5 by the controller 6 and stored in the frequency value register 83. The zero detector 84 detects whether the content n of the register 83 is zero or not. When zero is detected, an output signal 841S on a signal line 841 becomes binary "1", which is supplied through the OR-circuit 87 to the counter 82, whereby the content of the counter 82 is counted up by +1.

When the content of the zero detector 84 is not zero, the upper limit value of the character block width, which is the content of the register 81, and the content of the counter 82 are transferred to the substrator 85 by the operation of the controller 6. The substractor 85 substracts the upper limit value in the register 81 from the content of the counter 82. The subtracted value is transferred to the comparator 86 and compared with the content of the threshold register 17. When the content of the register 17 is greater than the subtracted value from the comparator 85, an output signal 861S on a signal line 861 becomes binary "1", whereby the upper limit value stored in the register 81 is updated and the content of the counter 82 is counted up by +1 by the operation of the controller 6. When the content of the register 17 is less than or equal to the subtracted value, the lower limit value stored in the register 81 and the upper limit value updated in the abovementioned manner are transferred to the one-character width class register 18.

A decision circuit 9 detects whether the character pitch in the character arrays stored in the memory 2 is variable or fixed. A substractor 91 subtracts the lower limit value from the updated upper limit value and supplies the resulted value to the comparator 93, which is also supplied with a predetermined threshold value from a register 92. The threshold value in the register 92 may be determined depending upon the average height detected by the average height detector 7 as in the register 17. When the threshold value from the register 92 is greater than the output value from the subtractor 91, the comparator 93 produces an output signal 931S of binary "1" representative of the fixed pitch. When the threshold value is less than or equal to the output value from the subtractor 91, the comparator 93 produces an output signal 931S of binary "0" representative of the variable pitch.

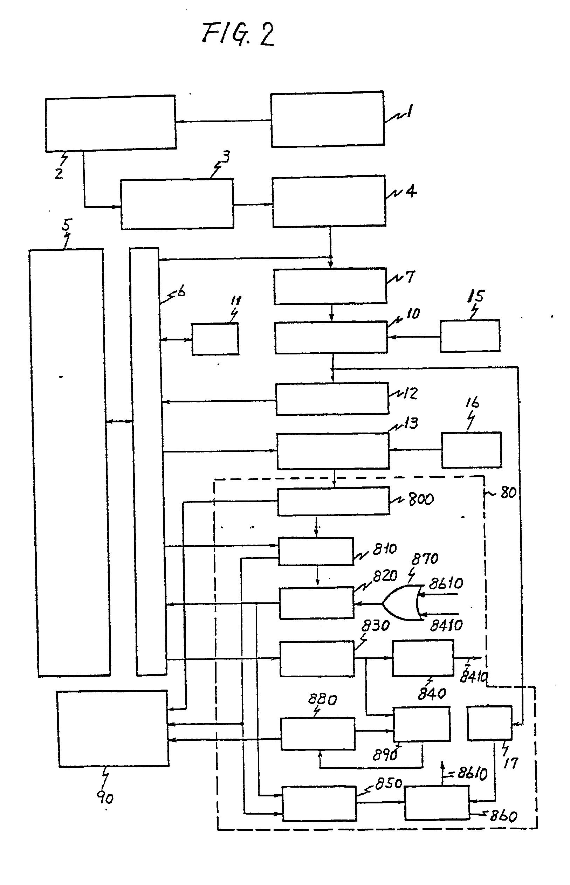

Referring to Fig. 2, the second embodiment is identical to the first embodiment except that the first embodiment comprises the one-character width class detector 8 and the decision circuit 9, while the second embodiment comprises a one-character width class detector 80 and decision circuit 90.

The detector 80 comprises a one-character initial class register 800, an upper limit value register 810, a counter 820, a frequency value register 830, a zero detector 840, a subtractor 850, a comparator 860, the threshold register 17, an increased frequency register 880, an adder 890 and an OR-circuit 870.

The register 800 is identical to the register 81 in the first embodiment. The upper limit value stored in the register 800 is transferred to the upper limit value register 810. The upper limit value stored in the register 810 is set in the counter 820 and counted up by +1. The frequency value corresponding to the width of the character block which is the content of the counter 820 is read out from the table memory 5 by the controller 6 and stored in the frequency value register 830. The zero detector 840 detects whether the content of the register 830 is zero or not. When zero is detected, an output signal 8410S on a signal line 8410 becomes binary "1", which is supplied through the OR-circuit 870 to the counter 820, whereby the content of the counter 820 is counted up by +1.

When the content of the zero detector 840 is not zero, the upper limit value of the charcter block width, which is the content of the register 810, and the content of the counter 820 are transferred to the substractor 850 by the operation of the controller 6. Further, the content of the frequency register 830 is transferred to the adder 890, in which the contents in the registers 830 and 880 are added to each other to produce an increased frequency value which is stored in the register 880 (The register 880 has been reset to "0" at the start of the operation). The substractor 850 subtracts the upper limit value in the register 810 from the content of the counter 820 to produce the subtracted value, which is transferred to the comparator 860, and compared with the content of the threshold register 17. When the content of the register 17 is greater than the subtracted value from the comparator 850, an output signal 8610S on a signal line 8610 becomes binary "1", whereby the upper limit value stored in the register 810 is updated and the content of the counter 820 is counted up by +1 by the operation of the controller 6. When the content of the register 17 is less than or equal to the subtracted value, the lower limit value stored in the register 800, the content of the register 810 and the content of the register 880 are transferred to the decision circuit 90.

The decision circuit 90 produces a decision function in response to the upper and lower limit values $V_U$ and $V_L$ and the frequency value $N_S$ (which are the contents of the register 800), the upper limit value $V_{CU}$ for the one-character width class (which is the content of the register 810), and the frequency value incremental component $\Delta N_S$ from the frequency value $N_S$ (which is the content of the register 880), and then decides whether it is the variable-pitch type or the fixed-pitch type in response to the decision function, instead of using the incremental component $\Delta N_S$, the sum of the frequency value $N_S$ and the incremental component $\Delta N_S$.

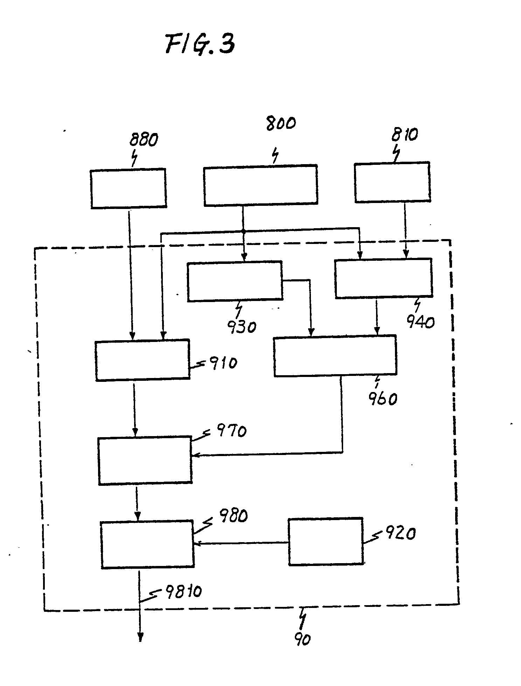

Referring to Fig. 3, a subtractor 930 subtracts the lower value $V_L$ from the upper limit value $V_U$ supplied from the register 800 to produce a difference $(V_U - V_L)$, which is transferred to a divider 960. A subtracter 940 subtracts the lower value $V_L$ supplied from the register 800 from the upper limit value $V_{CU}$ for the one-character width class supplied from the register 810 to produce a difference $(V_{CU} - V_L)$, which is transferred to the divider 960. the divider 960 divides the difference $(V_{CU} - V_L)$ supplied from the subtracter 940 by the difference $(V_U - V_L)$ supplied from the subtracter 920 to produce a value

$$(V_{CU} - V_L)/(V_U - V_L),$$

which is transferred to a multiplier 970. The value

$$(V_{CU} - V_L)/(V_U - V_L)$$

respresents a ratio of increment of the width of the character block. In case where the variation in width of the character block is great as in case of the variable-pitch type, the value $V_{CU}$ is sufficiently greater than the value $V_U$, whereby the value

$$(V_{CU} - V_L)/(V_U - V_L)$$

is greater than that in case of the fixed-pitch type.

A divider 910 divides the frequency value incremental component $\Delta N_S$ by the frequency value $N_S$ to produce a value $\Delta N_S/N_S$, which is transferred to the multiplier 970. The value $\Delta N_S/N_S$ in the variable-pitch type is greater than that in case of the fixed-pitch type.

The multiplier 970 produces the output value

$$\Delta N_S/N_S \, (V_{CU} - V_L)/(V_U - V_L),$$

which is transferred to a comparator 980. The comparator 980 compares the output value from the multiplier 970 with the content of a threshold register 970. When the content of the register 920 is greater than the output value from the multiplier 970, an output signal 9810S on a signal line 9810 becomes binary "0" representative of the variable-pitch type. When it is less than or equal to the output value, the output signal 9810S becomes binary "1" representative of the fixed-pitch type.

## Claim

A character pitch detecting apparatus for use in a character segmenting system for scanning character arrays on a paper and for segmenting to individual characters, comprising:·
means (1) for producing a binary character image having white and black bits by scanning said character arrays;

means (3) responsive to said binary character image for extracting character blocks which are surrounded by said white bits;
means (3) responsive to said character blocks for generating height data and width data for said character blocks;
means (5) for storing frequency information with respect to said width data; and
means (9;90) for detecting whether the character pitch in said character block is variable or fixed; characterized by
means (7) responsive to said height data for providing an average height data;
means (10) responsive to said average height data for providing a possible range of the character-block width in which a one-character can exist;
means (13) responsive to said frequency information stored in said storing means (5) for determining upper and lower limit values of a width range having a predetermined width, the width range lying within the possible range of the character block width and having the maximum sum of frequency values; and
means (8;80) for updating said upper limit value in response to said frequency information stored in said storing means (5) to provide lower and updated upper limit values with respect to one-character width class by repeatingly increasing said upper limit value unitl it reaches a width value which is followed by at least a predetermined number of successive width values having zero frequency; said means (9;90) for detecting whether the character pitch in said character block is variable or fixed being responsive to the difference of said lower and said updated upper limit values with respect to said one-character width class.

## Patentansprüch

Vorrichtung zum Bestimmen des Zeichenabstands zur Verwendung in einem Zeichensegmentiersystem zum Abtasten von Zeichenfeldern auf einem Papier und zum Segmentieren in individuelle Zeichen, mit:
einer Einrichtung (1) zum Erzeugen eines binären Zeichenbiles mit weißen und schwarzen Bits durch Abtasten der Zeichenfelder;
einer auf das binäre Zeichenbild ansprechenden Einrichtung (3) zum Extrahieren von Zeichenblöcken, die von den weißen Bits umgeben sind;
einer auf die Zeichenblöcke ansprechenden Einrichtung (3) zum Generieren von Höhendaten und Breitendaten für die Zeichenblöcke;
einer Einrichtung (5) zum Speichern von Frequenzinformation bezüglich der Breitendaten; und
einer Einrichtung (9;90) zum Bestimmen, ob der Zeichenabstand in dem Zeichenblock variabel oder fest ist; gekennzeichnet durch
eine auf die Höhendaten ansprechende Einrichtung (7) zum Liefern von durchschnittlichen Höhendaten;
eine auf die durchschnittlichen Höhendaten ansprechende Einrichtung (10) zum Liefern eines möglichen Bereichs der Zeichenblockbreite, innerhalb der ein einziges Zeichen existieren kann;

eine auf die in der Speichereinrichtung (5) gespeicherte Frequenzinformation ansprechende Einrichtung (13) zum Bestimmen von oberen und unteren Grenzwerten eines Breitenbereichs mit einer bestimmten Breite, wobei der Breitenbereich innerhalb des möglichen Bereichs der Zeichenblockbreite liegt und die maximale Summe von Frequenzwerten aufweist; und

eine Einrichtung (8;80) zum Aktualisieren des oberen Grenzwerts als Antwort auf die in der Speichereinrichtung (5) gespeicherte Frequenzinformation zum Liefern eines unteren und eines aktualisierten oberen Grenzwertes bezüglich der Klasse der Breite eines einzigen Zeichens durch wiederhaltes Erhöhen des oberen Grenzwerts, bis dieser einen Wert der Breite erreicht, welcher von mindestens einer bestimmten Zahl von aufeinanderfolgenden Breitenwerten mit der Frequenz Null gefolgt wird; wobei die Einrichtung (9;90) zum Bestimmen, ob der Zeichenabstand in dem Zeichenblock variabel oder fest ist, auf die Differenz zwischen dem unteren und dem aktualisierten oberen Grenzwert bezüglich der Klasse der Breite eines einzigen Zeichens anspricht.

## Revendication

Appareil pour détecter le pas de caractères pour emploi dans un système de segmentation de caractères pour procéder au balayage de matrices de caractères sur un papier et pour procéder à la segmentation en caractères individuels, comprenant:

—un moyen (1) pour produire une image de caractère binaire ayant des bits blancs et noirs par balayage des matrices de caractères;

—un moyen (3) répondant à l'image de caractère binaire pour extraire des blocs de caractères qui sont entourés par les bits blancs;

—un moyen (3) répondant aux blocs de caractères pour produire des données de hauteur et des données de largeur pour les blocs de caractères;

—un moyen (5) pour stocker une information sur la fréquence s'agissant des données de largeur; et

—un moyen (9;90) pour détecter si le pas des caractères dans le bloc de caractères est variable ou fixe, caractérisé par:

—un moyen (7) répondant à la donnée de hauteur pour fournir une donnée de hauteur moyenne:

—un moyen (10) répondant à la donnée de hauteur moyenne pour fournir une gamme possible de la largeur des blocs de caractères dans laquelle un caractère peut exister;

—un moyen (13) répondant à l'information sur la fréquence stockée dans le moyen de stockage (5) pour déterminer des valeus de limites supérieure et inférieure d'une gamme de largeurs ayant une largeur prédéterminée, la gamme de largeurs étant située dans la gamme possible de la largeur des blocs de caractères et ayant la somme maximum des valeurs de fréquence; et

—un moyen (8,80) pour mettre à jour la valeur de la limite supérieure en réponse à l'information sur la fréquence stockée dans le moyen de stockage (5) pour fournir des valeurs de la limite inférieure et de la limite supérieure mise à jour par rapport à une classe de largeur d'un caractère par augmentation de façon répétitive de la valeur de la limite supérieure jusqu'à ce qu'elle atteigne une valeur de largeur que est suivie par au moins un nombre prédéterminé de valeurs successives de la largeur ayant une fréquence nulle; le moyen (9,90) pour détecter si le pas des caractères dans le block de caractères est variable ou fixe répondant à la différence des valeurs des limites inférieures et supérieure mise à jour par rapport à la classe de largeurs d'une caractère.

FIG. 1

FIG. 2

1

2

3

4

5

6

7

10 11 15

12

13 16

80 800

810 870

820 8610

8410

830

840 8410

880 890

850 8610 17

860

90

# FIG.3